# EUROPÄISCHE PATENTANMELDUNG

(11) **EP 1 234 628 A2**
(43) Veröffentlichungstag der Anmeldung: **28.08.2002**
(21) Anmeldenummer: 01125106.3
(22) Anmeldetag: 23.10.2001
(51) Int. Cl.: B23B 31/16, B23C 5/12, B23C 5/08

(54) **Spannbacke**

(30) Priorität: 16.02.2001 DE 20102880 U
(71) Anmelder: Robert Schröder GmbH & Co. KG, 42369 Wuppertal (DE)
(72) Erfinder: Casel, Andrè, 42369 Wuppertal (DE)
(74) Vertreter: Füssel, Michael, Dipl.-Ing.

(57) **Zusammenfassung**

Die vorliegende Erfindung betrifft eine Spannbacke nach Oberbegriff des Anspruchs 1.

Um eine Spannbacke so zu verbessern, daß sie zur Aufnahme polygonaler Werkzeugschafte unterschiedlicher Querschnitte geeignet ist, wird sie so ausgebildet, daß der Eintrittswinkel der Längskerbe (10) größer als der Kerbfußwinkel ist.

## Beschreibung

Die vorliegende Erfindung betrifft eine Spannbacke nach Oberbegriff des Anspruchs 1.

Spannbacken mit diesen Merkmalen sind bekannt z. B. aus Katalog Schröder.

Derartige Spannbacken weisen im wesentlichen axial zur Drehachse des Spannfutters laufende Längskerben auf, die der formschlüssigen Aufnahme eines Werkzeugschafts dienen.

Derartige Werkzeugschäfte treten beispielsweise als Vierkantschaft bei Gewindebohrern oder als Sechskantschaft bei Schraubeinsätzen, sogenannten Bits auf.

Unter Werkzeughalter im Sinne der vorliegenden Erfindung werden auch sogenannte Wendeisen für Gewindebohrer verstanden, die im allgemeinen zur Aufnahme des üblicherweise vierkantigen Werkzeugschafts des Gewindebohrers ausgelegt sind.

Wesentlich an derartigen Spannbacken ist aber in jedem Fall die Vorbereitung zur formschlüssigen Aufnahme des Werkzeugschafts, um über den Werkzeughalter große Drehmomente in das jeweilige Werkzeug einleiten zu können, ohne daß die Gefahr des Durchrutschens des Werkzeugs besteht.

Die polygonalen Antriebsschafte derartiger Werkzeuge liegen dann formschlüssig zwischen den jeweils paarweise vorhandenen Spannbacken des Werkzeughalters und können, da sie nicht rotationssymmetrisch sind, auch unter höchsten Drehmomenten nicht im Spannfutter durchdrehen.

Es ist Aufgabe der vorliegenden Erfindung, die bekannten Spannbacken so zu verbessern, daß sie zur Aufnahme polygonaler Werkzeugschafte unterschiedlicher Querschnitte geeignet sind.

Diese Aufgabe löst die Erfindung mit den Merkmalen des Anspruchs 1.

Aus der Erfindung ergibt sich der Vorteil, daß mit ein und demselben Werkzeughalter sowohl die sich diametral gegenüberliegenden Ecken eines quadratischen Werkzeugschafts als auch eines hexagonalen Werkzeugschafts formschlüssig aufgenommen werden können, ohne daß das jeweilige Spannbackenpaar zuvor gewechselt werden muß.

Zu diesem Zweck weist die Längskerbe zwei unterschiedlich große Flankenwinkel auf, von denen der größere Flankenwinkel den Eintrittsquerschnitt der Längskerbe bestimmt, während der kleinere den Kerbfußwinkel definiert.

Die Flanken der Längskerbe, welche zwei benachbarte Polygonseiten miteinander einschließen, öffnen sich somit abhängig vom Polygonquerschnitt des Werkzeugschafts einmal für einen Werkzeugschaft von größerem Winkel, und ein anderes Mal für einen Werkzeugschaft mit dem kleineren Kerbfußwinkel. In beiden Fällen dient die Längskerbe der formschlüssigen Aufnahme eines Werkzeugschafts, bei dem zwei benachbarte Polygonseiten einen vorbestimmten Flankenwinkel zwischen sich einschließen.

Ohne die Erfindung auf Werkzeugschäfte mit Sechskantund Vierkantquerschnitten zu beschränken, dürften die allermeisten Anwendungsfälle von Spannbacken gelöst werden, bei denen der Eintrittswinkel der Längskerbe 120° beträgt, während der hierzu kleinere Kerbfußwinkel 90° beträgt.

Bei dieser Weiterbildung der Erfindung dient der Eintrittswinkel von 120° der formschlüssigen Aufnahme eines Sechskantquerschnitts während der Kerbfußwinkel der formschlüssigen Aufnahme eines quadratischen Querschnitts dient.

Wesentlich für die Erfindung ist infolge der paarweisen Anwendung der Spannbacken die Tatsache, daß der Werkzeugschaft den Querschnitt eines regelmäßigen Polygons mit einer geraden Anzahl von Polygonflächen aufweist. Diese Forderung stellt sicher, daß sich bezüglich der Drehachse des Werkzeughalters jeweils zwei Polygonecken diametral gegenüberliegen, welche in die jeweiligen Längskerben der Spannbacken einführt und dann radial aufeinander zu eingespannt werden.

Die Längskerben können am Übergang vom Eintrittswinkel vom Kerbfußwinkel gekantet sein. Gleichermaßen kann die Längskerbe an dieser Stelle so ausgerundet sein, daß die Kontur des ausrundenden Bogens sowohl in die den Eintrittswinkel aufspannenden Kerbflanken als auch in die den Kerbfußwinkel aufspannenden Kerbflanken tangential ausläuft.

In einer Weiterbildung kann die Längskerbe auch konvex gekrümmte Flanken aufweisen, mit zumindest zwei Tangenten im Bereich des Eintrittswinkels und des Kerbfußwinkels, welche die vorgenannte Bedingung erfüllen.

Auf diese Weise ist sichergestellt, daß auch unter Berücksichtigung des Werkzeugverschleißes bei der Herstellung dieser Spannbacken stets die Bedingung gemäß Hauptanspruch erfüllt ist.

Vorteilhafterweise geht man für die vorliegende Erfindung davon aus, daß der Werkzeugschaft ausschließlich parallel zueinander liegende Mantellinien aufweist, so daß die Mantellinien der Längskerbe alle parallel zur Drehachse liegen können.

Auf diese Weise läßt sich der Werkzeugschaft ohne zusätzliche Klemmkomponenten in Axialrichtung zuverlässig befestigen.

Dabei ist der Aufwand für die Erfindung, gemessen am Fortschritt gering.

Zur Herstellung derartiger Spannbacken muß in Abänderung vom bisherigen Stand der Technik lediglich ein Scheibenfräser verwendet werden, dessen sich gegenüberliegende Fräserflanken von außen nach innen zuerst unter einem kleinen und dann unter einem größeren Winkel zueinander geneigt sind.

Mit derartigem Werkzeug läßt sich eine derartige Spannbacke in einem Arbeitszug herstellen, ohne daß ein Werkzeugwechsel erforderlich wäre wie bei einer sequenziellen Herstellung zuerst des einen Flankenwinkels und dann des zweiten Flankenwinkels.

Berücksichtigt man zudem einen gewissen Verschleiß an derartigem Scheibenfräser zur Herstellung dieser Spannbacken, so können unter den Merkmalen der Ansprüche 9 und 10 auch Ausführungsbeispiele denkbar sein, die mit einem bereits verschlissenen Scheibenfräser hergestellt sind.

Diese Maßnahmen erhöhen daher die mögliche Standzeit derartiger Herstellungswerkzeuge ohne daß der Grundgedanke der Erfindung verlassen wird.

Im vorliegenden wird die Erfindung anhand von Ausführungsbeispielen näher erläutert.

Es zeigen:
- Fig.1: eine Spannbacke nach dieser Erfindung im Spannfutter eines zugehörigen Werkzeughalters
- Fig.2: eine Spannbacke nach Fig.1 in Draufsicht von oben im Zusammenwirken mit einem hexagonalen Werkzeugschaft
- Fig.3: eine Spannbacke nach dieser Erfindung in Draufsicht von oben im Zusammenwirken mit einem quadratischen Werkzeugschaft
- Fig.4: eine allgemeine Darstellung möglicher Weiterbildung der Erfindung
- Fig.5: einen Scheibenfräser zur Herstellung derartiger Spannbacken nach dieser Erfindung
- Fig.6: einen Scheibenfräser gem. Fig.5 bei der Herstellung einer Spannbacke nach dieser Erfindung.

Sofern im folgenden nichts anderes gesagt ist, gilt die folgende Beschreibung stets für alle Figuren.

Die Figuren zeigen eine Spannbacke 3 für das Spannfutter 2 eines Werkzeughalters 1. Wesentlich ist, daß derartige Spannbacke 3 paarweise mit einer gegenüberliegenden Spannbacke 6 zusammenwirkt. Beide sich gegenüberliegenden Spannbacken 3,6 spannen zwischen sich einen axialen zylindrischen Hohlraum 25 auf, der im allgemeinen zentral von der Drehachse 7 durchstoßen wird.

Üblicherweise werden die paarweisen Spannbacken 3,6 durch eine Spreizfeder 5 auseinander gehalten, so, daß sie sich diametral zur Drehachse 7 voneinander beabstandet gegenüberliegen. Um einen Werkzeugschaft in den geradzylindrischen Hohlraum 25 einspannen zu können, bedarf es der Zustellung der Spannbacken 3 mit radialer Komponente aufeinander zu.

Zu diesem Zweck ist jede Spannbacke an ihrem nach außen weisenden Ende kegelförmig angeschrägt und wird von einer dem Werkzeughalter zugehörigen Spannhülse 8 übergriffen, welche mit der kegelförmigen Anschrägung eine Spannflächenpaarung 9 bildet.

Die Spannhülse 8 sitzt mit einem Innengewinde auf einem Außengewinde des Werkzeughalters 1 und kann bei Verdrehung in axialer Richtung bewegt werden. Dabei gleiten die an der Spannflächenpaarung 9 beteiligten Schrägflächen von Spannbacke 3 und Spannhülse 8 aufeinander ab, so daß sich die Spannbacke 3 und die gegenüberliegende Spannbacke 6 aufeinander zu bewegen können. Beim Öffnen der Spannhülse 8, also bei Drehung in entgegengesetzter Richtung, wirkt die Spreizfeder 5, so daß die Spannbacke 3 und die gegenüberliegende Spannbacke 6 voneinander weg bewegt werden.

Dabei liegen die Spannbacken 3 mit ihrer dem Werkzeughalter 1 zugewandten Unterseite flach auf dem Boden 4 des Werkzeughalters 1 auf, so daß sie lediglich in Richtung zur Drehachse 7 bzw. von dieser weg beweglich sind. Diese Bewegung wird in der Zustellrichtung über die Spannhülse 8 den Spannbacken 3,6 aufgeprägt und in der entgegengesetzten Richtung über die Spreizfeder 5, sofern die Spannhülse 8 gelöst wird.

Wesentlich ist, daß jede Spannbacke 3,6 eine der Drehachse 7 zugewandte Längskerbe 10 aufweist, welche der formschlüssigen Aufnahme des Werkzeugschafts dient.

Die Erfindung zeichnet sich dadurch aus, daß der Eintrittswinkel 12 der Längskerbe 10 größer als der Kerbfußwinkel 13 ist. Auf diese Weise können Werkzeugschäfte unterschiedlicher Polygonquerschnitte zwischen ein und dasselbe Spannbackenpaar 3,6 verbracht und dort formschlüssig eingeklemmt werden.

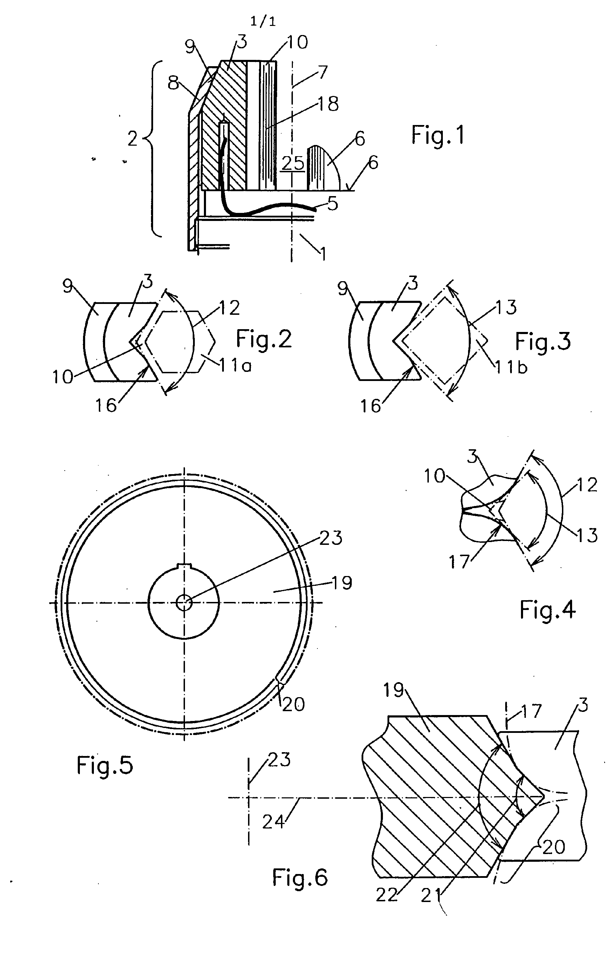

Dieser Sachverhalt ist in den Figuren 2 und 3 gezeigt.

Fig.2 zeigt das Einbringen eines hexagonalen Werkzeugschafts 11a in eine Spannbacke 3 nach dieser Erfindung.

Derjenige Winkel, den zwei benachbarte Flanken des Werkzeugschafts miteinander einschließen, beträgt bei diesem regelmäßigen Sechseck 120°.

Demzufolge kommt der Werkzeugschaft 11a an denjenigen Flanken der Längskerbe 10 zur Anlage, welche den zugehörigen Eintrittswinkel 12 miteinander einschließen. Im vorliegenden Fall beträgt der Eintrittswinkel 12 120°.

Im Unterschied hierzu zeigt Fig.3 die Verhältnisse bei einem Werkzeugschaft 11b quadratischen Querschnitts. Der Winkel, der zwischen zwei benachbarten Flanken eines quadratischen Werkzeugschafts eingeschlossen wird, beträgt 90°. Demzufolge beträgt der Kerbfußwinkel 13 im vorliegenden Fall auch 90°.

Der Scheitelpunkt des im Verhältnis zum Eintrittswinkel 12 kleineren Kerbfußwinkels 13 ist in jedem Falle weiter von der Drehachse 7 entfernt um die Doppelfunktion der erfindungsgemäßen Spannbacke realisieren zu können.

Ergänzend zeigen die Figuren 2 und 3 Längskerben 10, die am Übergang von den unter dem Eintrittswinkel 12 stehenden Flanken zu den unter dem Kerbfußwinkel stehenden Flanken eine Kerbstufe 16 aufweisen, also gestuft sind.

Diese Maßnahme schafft zwar eine von der Anschauung her eindeutig definierte Zone in der jeweiligen Längskerbe, wo eindeutig nur ein jeweils zugeordneter Polygonquerschnitt des Werkzeugschafts einliegen kann und dient folglich auch der hohen Drehmomentübertragung infolge der große abtragenden Flächen zwischen Längskerbe und Werkzeugschaft. Gleichwohl sin diese Maßnahmen für die Realisierung der Erfindung nicht zwingend notwendig.

Fig.4 zeigt in Ergänzung zum bisher gesagten eine Längskerbe 10, welche von der unter dem Eintrittswinkel 12 stehenden Kerbflanke in die Kerbfußflanke unter Bildung eines jweils tangential auslaufenden Bogens 17 übergeht. Hierunter ist zu verstehen, daß der Bogen 17 jeweils tangential in die unter dem Eintrittswinkel stehende Kerbflanke als auch tangential in die unter dem Kerbfußwinkel stehende Kerbfußflanke ausläuft und - von der Materialseite der Spannbacke her gesehen - konvex verläuft.

Diese Konstellation ist denkbar bei bereits leicht verschlissenen Herstellwerkzeugen zur Herstellung derartiger Spannbacken und stellt somit die Funktionsfähigkeit derartiger Spannbacken auch für den Fall sicher, daß diese mit einem bereits verschlissenen Herstellungswerkzeug gefertigt wurden.

Insgesamt gesehen kann, wie in Fig.6 gezeigt ist, die Längskerbe auch insgesamt konvex gekrümmte Flanken aufweisen, die in Richtung zum Kerbfuß den kleineren Flankenwinkel 21 und in Richtung zum Kerbeintritt den größeren Flankenwinkel 22 zwischen sich aufspannen.

Wie insbesondere Fig.1 zeigt, verlaufen die Mantellinien 18 der Längskerbe 10 ausschließlich parallel zur Drehachse 7 und spannen somit den geradzylindrischen Raum 25 auf, in welchen der jeweilige Werkzeugschaft axial eingeführt wird.

Ergänzend hierzu zeigen die Figuren 5 und 6 ein Werkzeug zur Herstellung derartiger Spannbacken und ein derartiges Werkzeug bei der Herstellung derartiger Spannbacken.

Gemäß Fig.5 ist hierzu ein Scheibenfräser 19 vorgesehen, der zwei sich gegenüberliegende Fräserflanken 20 aufweist, die zueinander unter vorbestimmtem Flankenwinkel geneigt sind.

Wesentlich ist nun, daß die Fräserflanken 20 von außen nach innen zuerst unter einem kleineren Flankenwinkel 21 und dann unter einem größeren Flankenwinkel 22 zueinander geneigt sind.

Auf diese Weise kann die erfindungsgemäße Spannbacke mit einer einzigen Werkzeugaufspannung gefertigt werden, weil die Positivkontur des Scheibenfräsers genau der Negativkontur der Spannbacke 3 entspricht, wie Fig.6 zeigt.

Hierzu ist festzuhalten, daß sich derartiger Scheibenfräser 9 um eine hier senkrecht aus der Papierebene herauszeigende Drehachse 23 dreht, während die Spannbacke 3 jeweils tangential dazu am Scheibenfräser 19 vorbeigefahren wird.

Dabei graben sich die Fräserflanken mit dem kleineren Flankenwinkel 21 zuerst und anschließend mit dem größeren Flankenwinkel 22 in das Material des Spannbackenrohlings ein und arbeiten die Längskerbe nach dieser Erfindung aus dem Rohling heraus.

Ergänzend hierzu zeigt Fig.6 noch, daß die Längskerbe bezüglich der mittleren Radialebene 24 des Scheibenfräsers 19 symmetrisch ist und daß entweder infolge Werkzeugverschleißes oder entsprechender Grundkontur des Scheibenfräsers 19 auch Längskerben von dieser Erfindung umfaßt sind, welche den gestrichelten Linien folgen.

### Bezugszeichenliste:

- 1: Werkzeughalter
- 2: Spannfutter
- 3: Spannbacke
- 4: Boden
- 5: Spreizfeder
- 6: gegenüberliegende Spannbacke
- 7: Drehachse
- 8: Spannhülse
- 9: Spannflächenpaarung
- 10: Längskerbe
- 11a: Werkzeugschaft, hexagonal
- 11b: Werkzeugschaft, quadratisch
- 12: Eintrittswinkel
- 13: Kerbfußwinkel
- 16: Kerbstufe
- 17: Bogen
- 18: Mantellinie
- 19: Scheibenfräser
- 20: Fräserflanke
- 21: kleinerer Flankenwinkel
- 22: größerer Flankenwinkel
- 23: Drehachse des Scheibenfräsers
- 24: mittlere Radialebene
- 25: Hohlraum

## Patentansprüche

1. Spannbacke (3) für das Spannfutter (2) eines Werkzeughalters (1) zur paarweisen Verwendung mit einer gegenüberliegenden Spannbacke (6), wobei Spannbacke (3) und gegenüberliegende Spannbacke (6) diametral zur Drehachse (7) des Spannfutters (2) voneinander beabstandet liegen und durch Zustellung des Spannfutters (2) mit radialer Komponente zum Zwecke des Einspannens bzw. Lösens eines Werkzeugschafts (11a,11b) aufeinander zu bzw. voneinander weg bewegbar sind, wobei jede Spannbacke (3,6) eine der Drehachse (7) zugewandte Längskerbe (10) zur formschlüssigen Aufnahme des Werkzeugschafts (11a,11b) aufweist, **dadurch gekennzeichnet, daß** der Eintrittswinkel (12) der Längskerbe (10) größer als der Kerbfußwinkel (13) ist.

2. Spannbacke (3) nach Anspruch 1, **dadurch gekennzeichnet, daß** der Eintrittswinkel (12) der Längskerbe (10) 120° beträgt.

3. Spannbacke (3) nach Anspruch 1 oder 2, **dadurch gekennzeichnet, daß** der Kerbfußwinkel 90° beträgt.

4. Spannbacke (3) nach einem der Ansprüche 1 bis 3, **dadurch gekennzeichnet, daß** die Längskerbe (10) am Übergang vom Eintrittswinkel (12) zum Kerbfußwinkel (13) eine Kante (16) aufweist, die parallel zur Drehachse (7) verläuft.

5. Spannbacke (3) nach einem der Ansprüche 1 bis 4, **dadurch gekennzeichnet, daß** die Längskerbe (10) von der unter dem Eintrittswinkel (12) stehenden Kerbflanke in die Kerbfußflanke unter Bildung eines jeweils tangential auflaufenden Bogens (17) übergeht.

6. Spannbacke (3) nach einem der Ansprüche 1 bis 5, **dadurch gekennzeichnet, daß** die Längskerbe (10) konvex gekrümmte Flanken aufweist, die zwischen sich im Bereich des Kerbfußes den kleineren Winkel (13) und im Bereich des Kerbeintritts den größeren Winkel (12) einschließen.

7. Spannbacke (3) nach einem der Ansprüche 1 bis 6, **dadurch gekennzeichnet, daß** die Mantellinien (18) der Längskerbe (10) parallel zur Drehachse (7) liegen.

8. Scheibenfräser (19) zur Herstellung einer Spannbacke (3,6) nach einem der Ansprüche 1 bis 7 mit sich gegenüberliegenden Fräserflanken (20), die unter vorbestimmtem Flankenwinkel zueinander geneigt sind, **dadurch gekennzeichnet, daß** die Fräserflanken (20) von außen nach innen zuerst unter einem kleineren Flankenwinkel (21) und dann unter einem größeren Flankenwinkel (22) zueinander geneigt sind.

9. Scheibenfräser (19) nach Anspruch 8, **dadurch gekennzeichnet, daß** der kleinste Flankenwinkel (21) kleiner oder gleich 90° und daß der größte Flankenwinkel (22) größer oder gleich 120° ist.

10. Scheibenfräser (19) nach Anspruch 9, **dadurch gekennzeichnet, daß** lediglich zwei Flankenwinkel (21,22) vorgesehen sind, von denen der kleinere 90° und der größere 120° beträgt.
